# EUROPEAN PATENT SPECIFICATION

(11) **EP 3 981 818 B1**
(45) Date of publication and mention of the grant of the patent: **22.04.2026**
(21) Application number: 20817728.7
(22) Date of filing: 15.04.2020
(51) Int. Cl.: C08G 59/50, C08J 5/04

(54) **EPOXY RESIN CURING AGENT, EPOXY RESIN COMPOSITION AND CURED PRODUCT THEREOF, AND FIBER-REINFORCED COMPOSITE MATERIAL**
EPOXIDHARZHÄRTER, EPOXIDHARZZUSAMMENSETZUNG UND GEHÄRTETES PRODUKT DARAUS SOWIE FASERVERSTÄRKTER VERBUNDSTOFF
AGENT DE DURCISSEMENT DE RÉSINE ÉPOXY, COMPOSITION DE RÉSINE ÉPOXY ET PRODUIT DURCI DE CELUI-CI, ET MATÉRIAU COMPOSITE RENFORCÉ PAR DES FIBRES

(30) Priority: 06.06.2019 JP 2019106198
(43) Date of publication of application: 13.04.2022
(73) Proprietor: MITSUBISHI GAS CHEMICAL COMPANY, INC., Chiyoda-ku Tokyo 100-8324 (JP)
(72) Inventor: IKEUCHI, Kousuke, Hiratsuka-shi, Kanagawa 254-0016 (JP)
(74) Representative: Hoffmann Eitle
(86) International application number: PCT/JP2020/016510
(87) International publication number: WO 2020/246144

(56) References cited:
- WO-A1-2019/093139
- WO-A1-2019/093139
- JP-A- 2004 115 427
- JP-A- 2009 102 563
- JP-A- 2009 102 563
- JP-A- 2016 532 000

## Description

### Technical Field

The present invention relates to an epoxy resin curing agent, an epoxy resin composition comprising the epoxy resin curing agent and an epoxy resin, and a cured product thereof, and a fiber-reinforced composite material comprising the cured product of the epoxy resin composition and a reinforcing fiber.

### Background Art

Of the fiber-reinforced composite materials (hereinafter also referred to as "FRP (Fiber Reinforced Plastics)"), carbon fiber-reinforced composite materials (Carbon Fiber Reinforced Plastics: CFRP) have extremely high elastic modulus, strength and are lightweight, and thus have been attracting attention as an alternative material to metal. Demand for CFRPs in applications of automotive structural materials, wind turbine blades, pressure vessels and aerospace applications is expected to increase, and thus demand for carbon fiber and matrix resin such as epoxy resin, which are used for CFRPs, has also been increasing.

Meanwhile, since the method of molding FRP is different in each of the applications of automotive structural materials, wind turbine blades, pressure vessels and aerospace applications, properties required for matrix resin for FRPs are also different depending on the application.

For example, wind turbine blades have been molded by infusion molding, the Va-RTM process (vacuum assisted resin transfer molding) or the light-RTM process. In these processes, for example, reinforcing fiber is previously placed in a mold with an upper mold and a lower mold using film or FRP, and the inside of the mold is evacuated and the mold is filled with an epoxy resin composition, which is a matrix resin, at atmospheric pressure to impregnate the reinforcing fiber with the resin composition, and then the epoxy resin is cured to perform molding.

In infusion molding, the Va-RTM process and the light-RTM process, it usually takes about several ten minutes to fill a mold with an epoxy resin composition prepared by mixing an epoxy resin and an epoxy resin curing agent due to the nature of the molding processes. Thus, the epoxy resin composition to be used in these molding processes is required to have low viscosity and long pot life. Isophoronediamine, a polyamine compound having a polyether skeleton, or the like is used as the epoxy resin curing agent.

For FRPs used for pressure vessels, molding by the filament winding process is employed. In the filament winding process, reinforcing fiber yarn impregnated with a matrix resin such as an epoxy resin composition is used to cover the outer surface of a liner and the matrix resin is cured. When the epoxy resin composition used in this method has short pot life and is fast curing, the epoxy resin is cured at the stage before molding. Thus, fast curing epoxy resin compositions cannot be used in the filament winding process.

By contrast, FRPs for automotive structural materials are molded by the high-cycle RTM process. This is an improvement of the conventional RTM process.

The conventional RTM process is a type of closed molding using a pair of upper and lower molds, in which a fiber-reinforced preform is placed in the mold, the mold is clamped and sealed, and then a resin such as an epoxy resin composition is injected into the mold via an injection port so as to impregnate the fiber-reinforced preform with the resin, and the resin is cured and then released from the mold. In the conventional RTM process, however, it takes a few hours for molding (including placing preform, impregnating with resin, curing and releasing the resin), and thus in the production of FRPs for automotive structural materials, the more productive, high-cycle RTM process is used.

In the molding technique of the high-cycle RTM process, all of the time of placing fiber-reinforced preform, the time of impregnation with resin and the time of curing and releasing resin are significantly reduced. In the process from impregnation with resin to curing in the high-cycle RTM process such as the high-pressure RTM process, which is a type of the high-cycle RTM process, reinforcing fiber is placed in a pair of upper and lower molds and the molds are sealed, and the pressure in the mold is reduced. Next, an epoxy resin, which is the main agent of an epoxy resin composition, and an epoxy resin curing agent are sent to the mixing head from separate tanks under pressure in the form of mist for collisional mixing in the head, and then the mixture is immediately injected into the mold to impregnate the reinforcing fiber therewith, and the epoxy resin is cured. The epoxy resin composition after collisional mixing is injected into the mold through a plurality of injection ports under high pressure so as to increase the filling speed into a mold and increase the impregnation speed for the reinforcing fiber.

N-aminoethylpiperazine (AEP), isophoronediamine (IPDA) and a mixture thereof, which are a general product, have known to be used as an epoxy resin curing agent for an epoxy resin composition intended for the conventional RTM process (see, for example, Patent Literature 1 and Non-Patent Literature 1). Further information on epoxy resin compositions and fiber reinforced materials containing the same can be found in Patent Literatures 2 and 3.

### Citation List

### Patent Literature

PTL 1: JP- H09-507262
PTL 2 : WO 2019/093139 A1
PTL 3 : JP 2009 102563 A

### Non Patent Literature

NPL 1: Ogawa, "Recent Development of Epoxy Resins for RIM Process," Thermosetting Resin, 1986, Vol.7, No.2, p.87-99

### Summary of Invention

### Technical Problem

Epoxy resin curing agents and epoxy resin compositions including the curing agent and an epoxy resin, which are to be used in molding by, for example, a high-cycle RTM process, desirably have low viscosity, be fast curing, and have long pot life and good heat resistance with high glass transition temperature (Tg) of a cured product. High Tg of the cured product is also advantageous in that since the composition can be released from a mold without cooling the mold to low temperature after molding by, for example, a high-cycle RTM process, and thus molding cycle can be shortened.

However, although AEP is fast curing and has low initial viscosity, it has short pot life and the problem is that the resulting cured product of the epoxy resin composition has low Tg. Furthermore, although IPDA has long pot life and the resulting cured product of the epoxy resin composition has relatively high Tg, the problem is that the curing speed is low and it has high initial viscosity. Even if the two are mixed to improve the defects of AEP and IPDA, the resulting epoxy resin curing agent used for molding by a high-cycle RTM process or the like do not have sufficient properties.

Furthermore, in the high-cycle RTM process, an epoxy resin and an epoxy resin curing agent are mixed and then immediately injected into the mold, and thus the pot life of the epoxy resin curing agent and the epoxy resin composition is not very important. Meanwhile, high impregnation properties for reinforcing fiber, high filling speed for a mold, fast curing and being releasable in short time after curing are important from the viewpoint of productivity. Thus, the epoxy resin composition desirably has low viscosity and is fast curing, and a cured product thereof desirably has high Tg.

An object of the present invention is to provide an epoxy resin curing agent which can give an epoxy resin composition including N-aminoethylpiperazine and/or isophoronediamine, which are generally used as a component of an epoxy resin curing agent, which has low viscosity and is fast curing and whose cured product has high Tg, an epoxy resin composition including the same and a cured product, and a fiber-reinforced composite material including the cured product of the epoxy resin composition and a reinforcing fiber.

### Solution to Problem

The present inventor has found that the above problem can be solved by an epoxy resin curing agent comprising (A) at least one compound selected from the group consisting of N-aminoethylpiperazine and isophoronediamine, and (B) norbornanediamine, wherein the mass ratio between the component (A) and the component (B) satisfies 0.60≤{(A)/[(A)+(B)]}<1 if the component (A) comprises N-aminoethylpiperazine.

### Advantageous Effect of Invention

The present invention can provide an epoxy resin curing agent and an epoxy resin composition with which CFRP for automotive structural materials and building materials can be produced with high productivity by the high-cycle RTM process or the like by using, as an epoxy resin curing agent, N-aminoethylpiperazine and/or isophoronediamine, which is generally used as a component of an epoxy resin curing agent.

### Description of Embodiments

### [Epoxy resin curing agent]

The epoxy resin curing agent of the present invention comprises (A) at least one compound selected from the group consisting of N-aminoethylpiperazine (AEP) and isophoronediamine (IPDA) (hereinafter also referred to as component (A)), and (B) norbornanediamine (NBDA, hereinafter also referred to as component (B)).

In the present invention, it has been found that properties derived from AEP and IPDA can be improved, low viscosity and fast curing of the resulting epoxy resin composition can be achieved, and Tg of the cured product can also be improved by mixing norbornanediamine to an epoxy resin curing agent including AEP and IPDA, which are generally used as a component of an epoxy resin curing agent.

### <Component (A)>: At least one compound selected from the group consisting of N-aminoethylpiperazine and isophoronediamine

The epoxy resin curing agent of the present invention comprises at least one compound selected from the group consisting of N-aminoethylpiperazine (AEP) and isophoronediamine (IPDA) as the component (A). These compounds have been widely used as a component of an epoxy resin curing agent and highly economical.

The advantage of AEP is that for properties of epoxy resin curing agents, AEP has low viscosity and is fast curing, and toughness of the cured product of the resulting epoxy resin composition is improved. Furthermore, the advantage of IPDA is that the resulting epoxy resin composition has long pot life and Tg of the cured product becomes high. In consideration of these properties, at least one compound selected from the group consisting of AEP and IPDA may be appropriately selected as the component (A) used in the present invention depending on the properties and the purpose of use desired.

It is preferable that when the epoxy resin curing agent is used for molding by, for example, a high-cycle RTM process, the component (A) includes N-aminoethylpiperazine from the viewpoint of low viscosity and fast curing. In other words, it is preferable that the component (A) is N-aminoethylpiperazine, or a mixture of N-aminoethylpiperazine and isophoronediamine, and it is more preferable that the component (A) is N-aminoethylpiperazine.

When the component (A) is a mixture of AEP and IPDA, the content ratio is not particularly limited. AEP and IPDA may be used at a mass ratio of preferably 1/99 to 99/1, more preferably 5/95 to 95/5.

The mass ratio between AEP and IPDA is more preferably 10/90 to 95/5, further preferably 20/80 to 95/5, still more preferably 30/70 to 95/5, and yet more preferably 40/60 to 95/5 from the viewpoint of low viscosity and fast curing of the resulting epoxy resin composition.

### <Component (B): norbornanediamine>

The epoxy resin curing agent of the present invention comprises norbornanediamine as the component (B). This achieves low viscosity and fast curing of the epoxy resin composition including the epoxy resin curing agent including the component (A), and improves Tg of the cured product.

In the present invention, 2,5-diaminomethyl bicyclo[2.2.1]heptane, 2,6-diaminomethyl bicyclo[2.2.1]heptane or a mixture thereof may be used as norbornanediamine. When a mixture of 2,5-diaminomethyl bicyclo[2.2.1]heptane and 2,6-diaminomethyl bicyclo[2.2.1]heptane is used, the ratio of mixing is not particularly limited and may be selected in an optional range.

In the epoxy resin curing agent of the present invention, the mass ratio between the component (A) and the component (B) may be selected in an optional range in which the mass ratio (A)/[(A)+(B)] is more than 0 and less than 1 depending on the properties and the purpose of use desired.

If the component (A) includes N-aminoethylpiperazine, the mass ratio between the component (A) and the component (B) satisfies 0.60 ≤ {(A)/[(A)+(B)]} < 1 from the viewpoint of low viscosity and fast curing of the resulting epoxy resin composition, and improvement of Tg of the cured product. Since the component (A) includes AEP and the mass ratio (A)/[(A)+(B)] is 0.60 or more and less than 1, fast curing of the resulting epoxy resin composition is achieved, Tg of the cured product is improved, and the composition has longer pot life than those in which the mass ratio (A)/[(A)+(B)] is 1. The mass ratio (A)/[(A)+(B)] when the component (A) includes AEP is 0.60 or more from the viewpoint of fast curing and economical improvement due to high ratios of the component (A). The mass ratio (A)/[(A)+(B)] is preferably 0.99 or less, more preferably 0.95 or less, further preferably 0.90 or less and still more preferably 0.85 or less from the viewpoint of improvement of Tg of the cured product and long pot life.

It is preferable that when the component (A) is isophoronediamine, the mass ratio between the component (A) and the component (B) satisfies 0 < {(A)/[(A)+(B)]} ≤ 0.85 from the viewpoint of low viscosity and fast curing of the resulting epoxy resin composition, and improvement of Tg of the cured product. When the component (A) is IPDA and the mass ratio (A)/[(A)+(B)] is more than 0 and 0.85 or less, curing speed and Tg of the cured product are improved without significant decrease in the pot life of the resulting epoxy resin composition compared to those in which the mass ratio (A)/[(A)+(B)] is 1. The mass ratio (A)/[(A)+(B)] when the component (A) is isophoronediamine is more preferably 0.01 or more, further preferably 0.05 or more, still more preferably 0.10 or more, and still further preferably 0.12 or more from the viewpoint of achieving long pot life and economical improvement due to high ratios of the component (A). The mass ratio (A)/[(A)+(B)] is more preferably 0.75 or less, still more preferably 0.70 or less, further preferably 0.60 or less, still more preferably 0.50 or less, still further preferably 0.40 or less, yet more preferably 0.30 or less and yet further preferably 0.25 or less from the viewpoint of fast curing of the resulting epoxy resin composition, improvement of Tg of the cured product and releasability of the cured product when the epoxy resin composition is used as a molding material. Releasability of the cured product is improved when both the gelation rate and Tg of the cured product of the epoxy resin composition are high.

The epoxy resin curing agent of the present invention may include a known curing agent other than the component (A) and the component (B), a known curing accelerator, an additive, a solvent and the like.

Examples of curing agents other than the component (A) and the component (B) include a polyamine compound other than the component (A) or the component (B), which has two or more amino groups in the molecule, and a modified product thereof. Examples of such polyamine compounds include linear aliphatic polyamine compounds such as ethylenediamine, diethylenetriamine, triethylenetetramine, tetraethylenepentamine, pentaethylenehexamine, hexamethylenediamine, 2-methylpentamethylenediamine and trimethylhexamethylenediamine; aliphatic polyamine compounds having an aromatic ring such as o-xylylenediamine, m-xylylenediamine and p-xylylenediamine; polyamine compounds having an alicyclic structure, such as mensendiamine, norbornanediamine, tricyclodecanediamine, adamantanediamine, diaminocyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane (bis(4-amino-3-methylcyclohexyl)methane), 3,3',5,5'-tetramethyl-4,4'-diaminodicyclohexylmethane and 4,4'-diaminodicyclohexylmethane; aromatic polyamine compounds such as phenylenediamine, diaminodiphenylmethane, diaminodiphenylsulfone, diethyltoluenediamine, and 2,2'-diethyl-4,4'-methylenedianiline; polyamine compounds having a heterocyclic structure, such as N,N'-bis(aminoethyl)piperazine; and polyether polyamine compounds. Furthermore, examples of modified products of the polyamine compounds include Mannich modified products, epoxy modified products, Michael adducts, Michael adduct polycondensates, styrene-modified products and polyamide modified products. One of them may be used alone or two or more of them may be used in combination.

When such a curing agent is included, the content of the curing agent is preferably 50% by mass or less, more preferably 30% by mass or less, further preferably 20% by mass or less, still more preferably 15% by mass or less, still further preferably 10% by mass or less, yet more preferably 5% by mass or less, and yet further preferably 1% by mass or less based on the total amount of the epoxy resin curing agent of the present invention for the present invention to be efficiently effective. Furthermore, the lower limit is 0% by mass.

The content of 3,3'-dimethyl-4,4'-diaminodicyclohexylmethane (bis(4-amino-3-methylcyclohexyl)methane), for example, is preferably 50% by mass or less, more preferably 30% by mass or less, further preferably 20% by mass or less, still more preferably 15% by mass or less, still further preferably 10% by mass or less, yet more preferably 5% by mass or less and yet further preferably 1% by mass or less based on the total amount of the epoxy resin curing agent of the present invention to ensure fast curing.

Examples of known curing accelerators include phenol compounds such as bisphenol A and styrenated phenol, and salts thereof; sulfonic acid compounds such as p-toluenesulfonic acid and methanesulfonic acid, and salts or esterified products thereof; carboxylic acid compounds such as salicylic acid and benzoic acid, and salts thereof; mercaptan terminated polysulfide compounds; guanidine compounds; and alkanol amine compounds. One of them may be used alone or two or more of them may be used in combination.

When such a curing accelerator is included, the content of the curing accelerator is preferably 50% by mass or less, more preferably 30% by mass or less, further preferably 20% by mass or less, still more preferably 15% by mass or less, still further preferably 10% by mass or less, yet more preferably 5% by mass or less, yet further preferably 1% by mass or less, and even more preferably 0.5% by mass or less based on the total amount of the epoxy resin curing agent of the present invention for the present invention to be efficiently effective. Furthermore, the lower limit is 0% by mass.

The content of the curing accelerator in the epoxy resin curing agent may finally be in the above range. The concentration of the curing accelerator may be appropriately changed when preparing or using the epoxy resin curing agent. The mixing ratio of the curing accelerator to the epoxy resin curing agent during molding of the epoxy resin composition including the curing agent may be constant, or the ratio may be changed by supplying the curing accelerator during molding with concentration gradient.

The total content of the component (A) and the component (B) is preferably 50% by mass or more, more preferably 70% by mass or more, further preferably 80% by mass or more, still more preferably 85% by mass or more, still further preferably 90% by mass or less, yet more preferably 95% by mass or less, and particularly preferably 99% by mass or more based on the total amount of the epoxy resin curing agent of the present invention for the present invention to be efficiently effective. The upper limit of the total content of the component (A) and the component (B) is 100% by mass based on the total amount of the epoxy resin curing agent of the present invention.

The epoxy resin curing agent of the present invention has a viscosity at a temperature of 25°C of preferably 150 mPa·s or less, more preferably 100 mPa·s or less, and further preferably 60 mPa·s or less. When the viscosity at a temperature of 25°C is 150 mPa·s or less, the curing agent is easily compatible with epoxy resin and productivity is improved when the curing agent is used for FRP. The lower limit of the viscosity at a temperature of 25°C of the epoxy resin curing agent is not particularly limited, and is preferably 10 mPa·s or more from the viewpoint of compatibility with epoxy resin. The viscosity of the epoxy resin curing agent may be measured by using an E-type viscometer and more specifically the viscosity may be measured by the method described in Examples.

The method of preparing the epoxy resin curing agent of the present invention is not particularly limited, and may be appropriately selected depending on the form of use, the apparatus to be used, and the type and the ratio of the components to be mixed. For example, the component (A), the component (B) and if necessary other components to be mixed may be brought into contact simultaneously to be mixed, or some of the components constituting the epoxy resin curing agent may be supplied with concentration gradient and mixed. Furthermore, as described later, the epoxy resin curing agent may be prepared by simultaneously mixing the components included in the epoxy resin curing agent and epoxy resin when preparing an epoxy resin composition.

### [Epoxy resin composition]

The epoxy resin composition of the present invention includes the epoxy resin curing agent of the present invention and an epoxy resin. Any epoxy resin may be used as long as it has a glycidyl group which reacts with active amine hydrogen in the epoxy resin curing agent of the present invention. An epoxy resin containing an aromatic ring or alicyclic ring structure in the molecule is preferred in view of excellent mechanical strength of the cured product.

The epoxy resin containing an aromatic ring in the molecule may be a resin containing at least one aromatic ring and at least two epoxy groups. The aromatic ring may be monocyclic or fused, and examples thereof include a benzene ring, a naphthalene ring, an anthracene ring and tetracene ring, but are not limited thereto. Of them, a benzene ring and a naphthalene ring are preferred, and a benzene ring is more preferred.

Examples of preferred epoxy resins containing an aromatic ring in the molecule include bisphenol epoxy resins such as a bisphenol A epoxy resin, a bisphenol E epoxy resin and a bisphenol F epoxy resin; biphenol epoxy resins; phenol novolac epoxy resins; and resorcinol epoxy resins.

Of the above, at least one selected from the group consisting of a bisphenol epoxy resin and a biphenol epoxy resin is more preferred. An epoxy resin represented by the following formula (1) is more preferred from the viewpoint of low viscosity and securing mechanical strength of cured products. 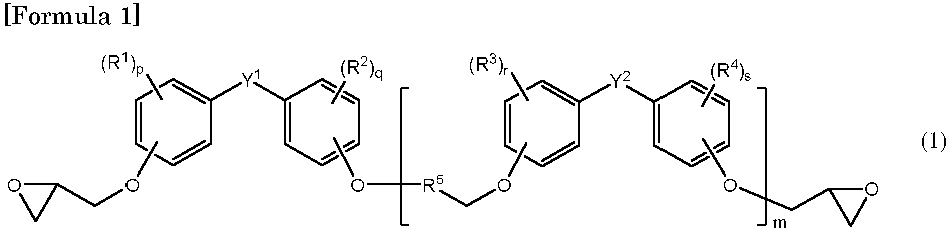 wherein R¹ to R⁴ are each independently an alkyl group having 1 to 6 carbon atoms, p, q, r and s are each independently an integer of 0 to 4; a plurality of R¹s, R²s, R³s and R⁴s may all be the same or different from each other; Y¹ and Y² are each independently a single bond, -CH₂-, -CH(CH₃)- or -C(CH₃)₂-; R⁵ is-CH₂CH(OH)- or -CH(OH)CH₂-; and m represents an average number of repeat units and is a number of 0 to 0.2.

R¹ to R⁴ are preferably an alkyl group having 1 to 4 carbon atoms, and more preferably at least one selected from the group consisting of a methyl group, an ethyl group, an isopropyl group and a t-butyl group.

p, q, r and s are all preferably an integer of 0 to 2, more preferably 0 or 1, and further preferably 0.

Y¹ and Y² are preferably -CH₂- or -C(CH₃)₂-, and more preferably -C(CH₃)₂-.

Furthermore, m is preferably 0 to 0.15, and more preferably 0.01 to 0.1 from the viewpoint of low viscosity and securing mechanical strength of cured products.

Of the above, a bisphenol A epoxy resin represented by the following formula (1-1) is more preferred.

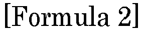

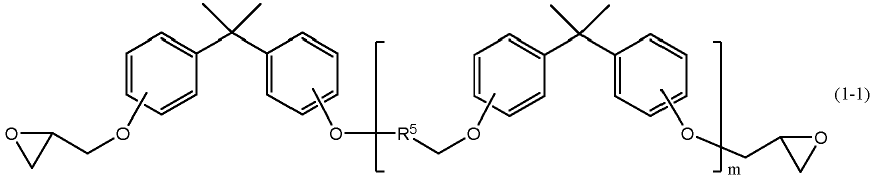

In the above formula, R⁵ and m are as defined above.

The epoxy resin containing an alicyclic structure in the molecule may be a resin containing at least one alicyclic structure and at least two epoxy groups.

The number of ring carbon atoms in the alicyclic structure is preferably 5 to 20, more preferably 5 to 12, further preferably 5 to 10, still more preferably 5 to 8, and still further preferably 6. The alicyclic structure may be saturated or unsaturated, and may be monocyclic or polycyclic. The alicyclic structure may have a substituent. Examples of the substituents include an alkyl group having 1 to 8 carbon atoms, hydroxyl group, and an alkoxy group having 1 to 8 carbon atoms.

Examples of the alicyclic structures include, but are not limited to, a cycloalkane ring, a cycloalkene ring, a bicycloalkane ring, a bicycloalkene ring and a tricycloalkane ring. Of them, a cycloalkane ring is preferred, a cycloalkane ring having 5 to 8 carbon atoms is more preferred, and a cyclohexane ring is further preferred.

Of the epoxy resins containing an alicyclic structure in the molecule, an epoxy resin which contains an alicyclic structure and does not contain an aromatic ring is preferred from the viewpoint of weatherability of the cured product.

Preferred examples of epoxy resins containing an alicyclic structure in the molecule include an epoxy resin prepared by the reaction between at least one selected from the group consisting of polyol having an alicyclic structure, polyamine having an alicyclic structure and a compound having an alicyclic structure and a hydroxyl group and an amino group, and epichlorohydrin.

Examples of polyols having an alicyclic structure include dihydroxycyclohexane, bicyclohexanediol, 2,2-bis(4-hydroxycyclohexyl)propane and bis(4-hydroxycyclohexyl)methane.

Examples of polyamines having an alicyclic structure include bis(aminomethyl)cyclohexane and diaminodicyclohexyl methane. Examples of compounds having an alicyclic structure and a hydroxy group and an amino group include an aminocyclohexanol.

Preferred examples thereof also include a hydrogenated epoxy resin prepared by hydrogenating the epoxy resin containing an aromatic ring described above.

An epoxy resin represented by the following formula (2) is more preferred as the epoxy resin containing an alicyclic structure in the molecule from the viewpoint of low viscosity and fast curing of the epoxy resin composition, mechanical strength and weatherability of the cured product and availability. 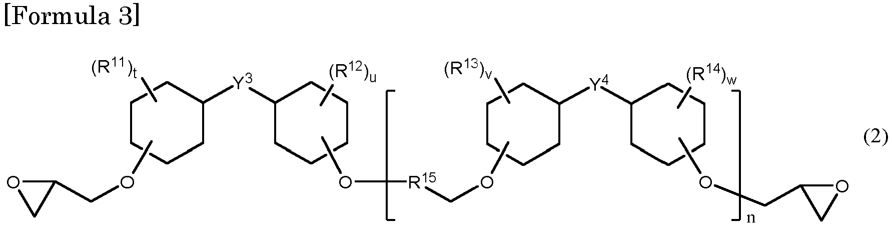 wherein R¹¹ to R¹⁴ are each independently an alkyl group having 1 to 6 carbon atoms, t, u, v and w are each independently an integer of 0 to 4; a plurality of R¹¹s, R¹²s, R¹³s and R¹⁴s may all be the same or different from each other; Y³ and Y⁴ are each independently a single bond, -CH₂-, -CH(CH₃)- or-C(CH₃)₂-; R¹⁵ is -CH₂CH(OH)- or -CH(OH)CH₂-; and n represents an average number of repeat units and is a number of 0 to 0.2.

R¹¹ to R¹⁴ are preferably an alkyl group having 1 to 4 carbon atoms, and more preferably at least one selected from the group consisting of a methyl group, an ethyl group, an isopropyl group and a t-butyl group.

t, u, v and w are all preferably an integer of 0 to 2, more preferably 0 or 1, and further preferably 0.

Y³ and Y⁴ are preferably -CH₂- or -C(CH₃)₂-, and more preferably -C(CH₃)₂-.

Furthermore, n is preferably 0 to 0.15, and more preferably 0.01 to 0.1 from the viewpoint of low viscosity and securing mechanical strength of cured products.

The epoxy resin represented by the formula (2) may be prepared by the reaction between polyol having an alicyclic structure and epichlorohydrin, or a hydrogenated epoxy resin prepared by hydrogenating the epoxy resin represented by the formula (1).

It is preferable that when the epoxy resin represented by the formula (2) is a hydrogenated epoxy resin, the degree of hydrogenation of the hydrogenated epoxy resin is close to 100% from the viewpoint of provision of a cured product having excellent weatherability. The degree of hydrogenation may be 50% or more, preferably 70 to 100%, more preferably 80 to 100%, further preferably 90 to 100%, and still more preferably 95 to 100%.

Of the above, a hydrogenated bisphenol A epoxy resin represented by the following formula (2-1) is more preferred.

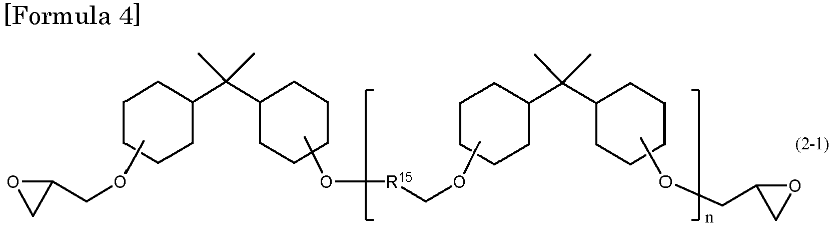

In the above formula, R¹⁵ and n are as defined above.

At least one selected from the group consisting of an epoxy resin represented by the formula (1) and an epoxy resin represented by the formula (2) is preferred, and at least one selected from the group consisting of an epoxy resin represented by the formula (1-1) and an epoxy resin represented by the formula (2-1) is more preferred as the epoxy resin from the viewpoint of low viscosity and mechanical strength of the cured product.

The epoxy equivalent of the epoxy resin is preferably 400 g/ equivalent or less, more preferably 300 g/ equivalent or less, further preferably 250 g/equivalent or less, and still more preferably 220 g/ equivalent or less from the viewpoint of satisfying both low viscosity and fast curing of the epoxy resin composition.

One epoxy resin may be used alone or two or more of them may be used in combination.

The epoxy resin composition of the present invention may also contain a modifying component such as a filler and a plasticizer, a component for adjusting flowability such as a thixotropic agent, and other components such as a pigment, a leveling agent, a tackifier and elastomer fine particles depending on the use.

The content of the epoxy resin curing agent in the epoxy resin composition of the present invention is such that the numerical ratio of active amine hydrogen atoms in the epoxy resin curing agent to epoxy groups in the epoxy resin (number of active amine hydrogen atoms in epoxy resin curing agent/ number of epoxy groups in epoxy resin) is preferably 1/0.5 to 1/2, more preferably 1/0.75 to 1/1.5, and further preferably 1/0.8 to 1/1.2. The ratio may finally be in the above range. The ratio may be constant or changed during molding of the epoxy resin composition.

The epoxy resin composition of the present invention has a viscosity at a temperature of 80°C of preferably 500 mPa·s or less, more preferably 400 mPa·s or less, further preferably 200 mPa·s or less, still more preferably 100 mPa·s or less, and still further preferably 50 mPa·s or less. When the epoxy resin composition has a viscosity at a temperature of 80°C of 500 mPa·s or less, productivity is improved when the composition is used for FRP. The lower limit of the viscosity at a temperature of 80°C of the epoxy resin composition is not particularly limited, and the lower limit is preferably 5 mPa·s or more in order to prevent occurrence of disturbance in reinforcing fiber caused by turbulence occurring in a mold due to an increase in the Reynolds number in molding of FRP.

It is preferable that the epoxy resin composition of the present invention has an initial viscosity at a temperature of 80°C 30 seconds after mixing the epoxy resin curing agent and the epoxy resin in the above range. The viscosity of the epoxy resin composition may be measured by using an E-type viscometer and more specifically the viscosity may be measured by the method described in Examples.

For the epoxy resin composition of the present invention, the gelation time at a temperature of 80°C is preferably 30 minutes or less, more preferably 25 minutes or less, further preferably 20 minutes or less and still more preferably 15 minutes or less from the viewpoint of fast curing. The gelation time is preferably 0.5 minute or more, and more preferably 1.0 minute or more from the viewpoint of workability.

The gelation time at a temperature of 120°C is preferably 10 minutes or less, more preferably 8.0 minutes or less, further preferably 5.0 minutes or less, and still more preferably 3.0 minutes or less. The gelation time is preferably 0.2 minute or more, and more preferably 0.5 minute or more from the viewpoint of workability.

The gelation time may be measured by the method described in Examples using a rheometer. More specifically, storage modulus G' and loss elastic modulus G" of the epoxy resin composition are measured at a temperature of 80°C or 120°C at a frequency of 1Hz with a plate-to-plate distance of 0.5 mm using a rheometer, and the point at which G' intersects with G" is determined as the gelation time.

The method for preparing the epoxy resin composition of the present invention is not particularly limited, and the composition may be prepared by mixing the epoxy resin curing agent, the epoxy resin and other components as needed by a known method using a known apparatus. The order of mixing the components to be contained in the epoxy resin composition is not particularly limited. The epoxy resin curing agent may be prepared and then mixed with an epoxy resin, or the component (A), the component (B) and other components which constitute the epoxy resin curing agent may be mixed with an epoxy resin simultaneously to prepare the epoxy resin composition.

It is preferable to bring the components to be contained in the epoxy resin composition into contact with each other immediately before use in order to avoid progress of gelation before use. The temperature at which the components to be contained in the epoxy resin composition are mixed may be appropriately adjusted depending on the viscosity of the epoxy resin, and is preferably 120°C or less, more preferably 100°C or less from the viewpoint of prevention of increase in viscosity. The temperature is preferably 20°C or more, more preferably 25°C or more from the viewpoint of compatibility of the epoxy resin. The time of mixing is in the range of preferably 0.1 to 15 minutes, more preferably 0.2 to 10 minutes, and further preferably 0.3 to 5 minutes. For example, the apparatus illustrated in the molding methods described later may be used.

### [Cured product]

The cured product of the epoxy resin composition of the present invention (hereinafter also simply referred to as "the cured product of the present invention") is prepared by curing the epoxy resin composition of the present invention described above by a known method. Conditions for curing the epoxy resin composition are appropriately selected depending on the purpose of use and their form, and are not particularly limited.

The form of the cured product of the present invention is also not particularly limited, and may be selected depending on the purpose of use. When the epoxy resin composition is used for coating, for example, the cured product of the composition is usually in the form of film. It is preferable that the cured product of the present invention is a matrix resin for the fiber-reinforced composite material described later in order for the present invention to be effective.

For the epoxy resin composition of the present invention, the glass transition temperature (Tg) of the cured product is preferably high from the viewpoint of improvement of productivity of the molding article and heat resistance of the molding article when used for a fiber-reinforced composite material and the like. High Tg of the cured product of the epoxy resin composition enables the composition to be released from a mold without cooling the mold to low temperature when used for, for example, a fiber-reinforced composite material, and thus molding cycle can be shortened. Furthermore, heat resistance of the molded article is improved.

For example, the cured product of the epoxy resin composition of the present invention prepared by curing at 120°C for 15 minutes has a Tg, which is determined by differential scanning calorimetry using a differential scanning calorimeter at a condition of a temperature increase rate of 5°C/minutes at 30 to 250°C, of preferably 100°C or more, more preferably 110°C or more, further preferably 114°C or more, still more preferably 115°C or more, and still further preferably 120°C or more. More specifically, Tg of the cured product may be measured by the method described in Examples.

### [Fiber-reinforced composite material]

The fiber-reinforced composite material (FRP) of the present invention comprises a cured product of the epoxy resin composition and a reinforcing fiber, and may be prepared by impregnating reinforcing fiber with the epoxy resin composition and then curing the composition.

Examples of reinforcing fibers include glass fibers, carbon fibers, boron fibers and metal fibers. One reinforcing fiber may be used alone or two or more of them may be used in combination. Of them, carbon fiber is preferred because the resulting composite material is strong and lightweight. The fiber-reinforced composite material of the present invention is preferably a carbon fiber-reinforced composite material (CFRP) comprising a cured product of the epoxy resin composition and carbon fiber.

The carbon fiber used for CFRP may be those produced by using rayon or polyacrylonitrile (PAN) as a starting material, or may be those produced by spinning petroleum or coal pitch as a starting material. Furthermore, recycled products prepared by reusing mill ends of carbon fiber and recycled carbon fiber prepared by removing resin from CFRP may also be used.

Examples of the form of carbon fiber include a form produced by simply aligning monofilaments or multifilaments in one direction or by alternately crossing them, and various forms of fabric such as knit or woven fabric, nonwoven fabric and mats. Of them, the forms of monofilament, fabric, nonwoven fabric and mats are preferred, and the form of fabric is more preferred.

The carbon fiber has an average fiber diameter of preferably 1 to 100 µm, more preferably 3 to 50 µm, and further preferably 4 to 20 µm. When the average fiber diameter is in that range, processing is easy and the resulting CFRP has excellent elastic modulus and strength. The average fiber diameter may be measured in observation with, for example, a scanning electron microscope (SEM). 50 or more fibers may be randomly sampled and the length may be measured to calculate the number average fiber diameter.

The carbon fiber has a fineness of preferably 20 to 4,500 tex, and more preferably 50 to 4,000 tex. When the fineness is in that range, impregnation with the epoxy resin composition is easy, and the resulting composite material has excellent elastic modulus and strength. The fineness may be determined by measuring the weight of long fiber having any length and converting it into the weight per 1,000 m. Carbon fiber having about 500 to 60,000 filaments may usually be preferably used.

FRP may also comprise a foaming material in addition to the cured product of the epoxy resin composition and reinforcing fiber. The foaming material is not particularly limited, and examples thereof include a foaming material made of a resin material such as a polyvinyl chloride resin, a polyurethane resin, a polystyrene resin, a polyolefin resin, an acrylic resin, a phenolic resin, a polymethacrylimide resin and an epoxy resin.

### <Method for producing fiber-reinforced composite material>

Although the method for producing the fiber-reinforced composite material of the present invention is not particularly limited, since the epoxy resin curing agent and the epoxy resin composition of the present invention are fast curing, it is preferable that the epoxy resin curing agent and the epoxy resin are mixed immediately before molding and then reinforcing fiber is impregnated with the composition in a shorter time, and the composition is cured.

In this view, it is preferable that the method for producing the fiber-reinforced composite material of the present invention includes a step of molding by the low-pressure RTM process, the middle-pressure RTM process, the high-pressure RTM process, the compression RTM process, the liquid compression molding process, the liquid lay-down molding process, the spray lay-down molding process, the surface RTM process, the prepreg compression molding process, the wet compression molding (WCM) process or the dynamic fluid compression molding (DFCM) process. Of these molding processes, the low-pressure RTM process, the middle-pressure RTM process and the high-pressure RTM process are preferred from the viewpoint of applicability to the high-cycle RTM process. The middle-pressure RTM process and the high-pressure RTM process are more preferred, and the high-pressure RTM process is far more preferred from the viewpoint of molding speed.

In the present description, the "low pressure" in the low-pressure RTM process means that the pressure is less than 0.5 MPa when feeding under pressure an epoxy resin, which is the main agent of the epoxy resin composition, and an epoxy resin curing agent for mixing them. Likewise, the "middle pressure" in the middle-pressure RTM process means that the pressure is 0.5 MPa or more and less than 7 MPa, and the "high pressure" in the high-pressure RTM process means that the pressure is 7 MPa or more and 20 MPa or less.

In the above molding methods, the epoxy resin, which is the main agent, and the epoxy resin curing agent can be mixed and used immediately before molding. Furthermore, since the resulting epoxy resin composition has low viscosity and is fast curing, the mold is filled with the composition fast and reinforcing fiber is impregnated with the composition fast, and the composition is cured fast, and consequently the molding time can be significantly reduced. Thus, the epoxy resin curing agent and the epoxy resin composition of the present invention are particularly suitable for the above molding process. Furthermore, by using the above molding process and applying the epoxy resin curing agent and the epoxy resin composition of the present invention thereto, middle to large-scale FRPs for automotive structural materials and building materials can be produced at high productivity.

It is preferable that in the high-pressure RTM process, a collision mixer is used as apparatus for mixing the epoxy resin, which is the main agent of the epoxy resin composition, and an epoxy resin curing agent. For example, reinforcing fiber is placed in a pair of upper and lower molds and the molds are sealed, and the pressure in the mold is reduced. Next, the epoxy resin, which is the main agent of the epoxy resin composition, and the epoxy resin curing agent are put in a separate tank, and are individually discharged through extremely small holes (orifices) at high speed to allow them to collide and be mixed in the mixing chamber of the collision mixer. The epoxy resin composition prepared as described above is injected into a mold under high pressure to impregnate reinforcing fiber with the epoxy resin composition, and then the epoxy resin is cured.

It is preferable that in the low-pressure RTM process, a dynamic mixer is used as apparatus for mixing the epoxy resin, which is the main agent of the epoxy resin composition, and the epoxy resin curing agent. A dynamic mixer is equipped with a high-speed cylindrical rotor having an uneven surface. For example, the epoxy resin and the epoxy resin curing agent are put in a separate tank, and are individually fed to the dynamic mixer and the two liquids of the main agent and the curing agent are mixed with the rotor. The epoxy resin composition prepared as described above is injected into a mold to impregnate reinforcing fiber with the epoxy resin composition, and then the epoxy resin is cured. The low-pressure RTM process is advantageous when the amount of the epoxy resin mixed is significantly different from that of the epoxy resin curing agent, and is advantageous in reduction of cost of equipment and space for equipment.

It is preferable that in the middle-pressure RTM process a static mixer is used as apparatus for mixing the epoxy resin, which is the main agent of the epoxy resin composition, and the epoxy resin curing agent. A static mixer is a tubular mixer incorporating one or more static mixing units composed of many mixing elements. For example, the epoxy resin and the epoxy resin curing agent are put in a separate tank, and are individually fed to the static mixer. By passing the two liquids of the epoxy resin and the epoxy resin curing agent through the twisted elements of the static mixer, the two liquids are mixed due to the action of division, conversion and inversion. The epoxy resin composition prepared as described above is injected into a mold to impregnate reinforcing fiber with the epoxy resin composition, and then the epoxy resin is cured. The middle-pressure RTM process is advantageous in that the epoxy resin composition can be fed to a mold under pressure and is lower in cost of equipment.

When FRP also comprises a foaming material in addition to the cured product of the epoxy resin composition and reinforcing fiber, the reinforcing fiber and the foaming material are placed in the mold and FRP may be produced in the same manner as described above.

The epoxy resin curing agent and the epoxy resin composition of the present invention may be suitably used also in the liquid compression molding (LCM) process, the liquid lay-down molding process and the wet compression molding (WCM) process. In the LCM process, the liquid lay-down molding process and the WCM process, the epoxy resin composition is cast on reinforcing fiber (on reinforcing fiber and a foaming material when FRP also comprises a foaming material), and then the epoxy resin is cured while impregnating the reinforcing fiber therewith by compression by heating. The dynamic fluid compression molding (DFCM) process is an improvement of the LCM process, the liquid lay-down process and the WCM process. The characteristic is that the pressure in the mold is reduced in compression by heating.

In molding of FRP, the temperature at which the epoxy resin composition is injected into a mold and reinforcing fiber is impregnated therewith is preferably 20 to 120°C, and more preferably 25 to 100°C. When the epoxy resin curing agent and the epoxy resin are supplied from a separate tank and mixed immediately before molding, the temperature of the epoxy resin curing agent and the epoxy resin in mixing may be individually set. The temperature of the epoxy resin curing agent in mixing is preferably 5 to 30°C, and more preferably 10 to 25°C from the viewpoint of prevention of increase in viscosity. Furthermore, the temperature of the epoxy resin in mixing may be appropriately adjusted depending on the viscosity of the epoxy resin, and is preferably 20 to 120°C, more preferably 25 to 100°C. The above temperature may be constant or changed during molding.

The time of impregnating reinforcing fiber with the epoxy resin composition is preferably 0.1 to 15 minutes, more preferably 0.2 to 10 minutes, and further preferably 0.3 to 5 minutes from the viewpoint of moldability and productivity.

The rate of discharge when injecting the epoxy resin composition into a mold is preferably 5 to 400 g per second, more preferably 10 to 100 g per second and further preferably 20 to 60 g per second from the viewpoint of moldability and productivity. The above rate may be constant or changed during molding.

The temperature for curing the epoxy resin composition is preferably 50 to 200°C, more preferably 80 to 150°C, and further preferably 100 to 150°C. The temperature of curing may be constant or changed during molding. When the temperature for curing is 50°C or more, curing of the epoxy resin proceeds thoroughly, and the resulting FRP has excellent mechanical properties. When the temperature is 200°C or less, the cost for adjusting the temperature of the mold is low. The time of curing the epoxy resin composition may be appropriately selected depending on the temperature of curing and the like, and is preferably 0.1 to 15 minutes, more preferably 0.2 to 10 minutes, and further preferably 0.5 to 5 minutes from the viewpoint of moldability and productivity.

FRP may be produced at high productivity by the above-mentioned molding process using the epoxy resin composition of the present invention. The fiber-reinforced composite material of the present invention is preferably an automotive structural material and a building material, and in particular an automotive structural material. Examples of automotive structural materials include bumpers, spoilers, cowlings, radiator grilles, garnishes, hoods, trunk lids, fender panels, door panels, roof panels, instrument panels, door trims, quarter trims, roof linings, pillar garnishes, deck trims, tonneau boards, package trays, dashboards, console boxes, kicking plates, switch bases, sheet backboards, sheet frames, armrests, sun visors, intake manifolds, engine head covers, engine undercovers, and oil filter housings.

### Examples

Hereinafter, the present invention will be described in more detail with reference to Examples and Comparative Examples, but the present invention is not limited the following Examples. The following methods were used for the measurement and evaluation.

### (Viscosity)

The viscosity of the epoxy resin curing agent was measured at 25°C and the viscosity of the epoxy resin composition was measured at 80°C, respectively, by using an E-type viscometer "TVE-22H Model Viscometer, cone-plate type" (manufactured by Toki Sangyo Co., Ltd.). The measurement of the viscosity of the epoxy resin composition at 80°C was started after mixing the epoxy resin and the epoxy resin curing agent, and the measured value was read every 30 seconds to check the change in the viscosity over time.

For the epoxy resin composition, lower viscosity at 80°C after 30 seconds shows low initial viscosity and high filling properties in molding and good moldability. Furthermore, little change in viscosity over time in the measurement at 80°C with low viscosity shows long pot life.

### (Gelation time)

The gelation time was measured at 80°C and 120°C using Rheometer "ARES-G2" (manufactured by TA Instruments Inc.). The epoxy resin composition was filled between aluminum plates heated at 80°C or 120°C, and the storage elastic modulus G' and the loss elastic modulus G" were measured at a temperature of 80°C and 120°C, a frequency of 1 Hz with a plate-to-plate distance of 0.5 mm, and the point at which G' intersects with G" was determined as the gelation time. A shorter gelling time means that the composition is fast curing.

### (Glass transition temperature (Tg))

Tg of the cured product of the epoxy resin composition was determined by differential scanning calorimetry of the epoxy resin composition cured by heating at 120°C for 15 minutes using a differential scanning calorimeter "DSC 6200" (manufactured by Seiko Instruments Inc.) at a condition of a temperature increase rate of 5°C/minutes at 30 to 250°C.

### (Releasability)

A carbon fiber cloth ("CO6343" manufactured by Toray Industries Inc., T300 plain weave cloth, the number of filaments of warp and weft: 3K, weight of the cloth: 198 g/m², 0.25 mm thick, 4 plies) was impregnated with the epoxy resin composition by hand lay-up molding at room temperature to prepare a CFRP base material. Subsequently, the CFRP base material was placed in aluminum upper and lower molds which had been previously heated at 120°C in an oven, and the molds were immediately sealed, and releasability after 6 minutes was evaluated based on the following criteria.
A: Easily released
B: Released
C: Cannot be released

Examples 1 to 9 and Comparative Examples 1 to 3 (Preparation of epoxy resin curing agent and epoxy resin composition)

N-aminoethylpiperazine (AEP, made by Tosoh Corporation) and isophoronediamine (IPDA, made by EVONIK), which are the component (A), and norbornanediamine (NBDA, made by Mitsui Chemicals Inc.), which is the component (B), were compounded and mixed in parts by weight described in Table 1 to give an epoxy resin curing agent.

Furthermore, the epoxy resin curing agent and liquid bisphenol A epoxy resin ("jER825" made by Mitsubishi Chemical Corporation), which is the main agent, were mixed so that the numerical ratio of active amine hydrogen atoms in the epoxy resin curing agent to epoxy groups in the epoxy resin, which is the main agent, (number of active amine hydrogen atoms in epoxy resin curing agent/ number of epoxy groups in the epoxy resin) was 1/1 to prepare an epoxy resin composition.

The epoxy resin curing agent and the epoxy resin composition prepared were evaluated by the method described above. The results are shown in Table 1. The epoxy resin jER 825 is a bisphenol A epoxy resin represented by the following formula (1-1) which has an epoxy equivalent of 175 g/ equivalent and in which m = 0.035.

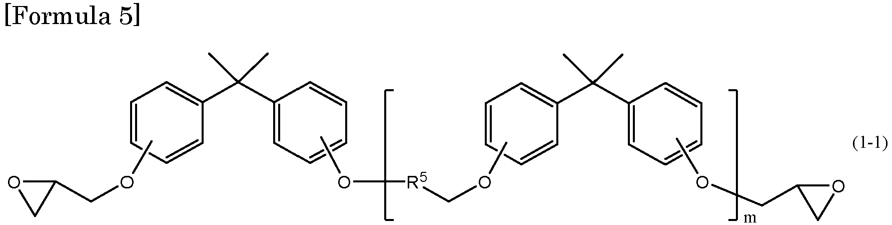

In the above formula, R⁵ is -CH₂CH(OH)- or -CH(OH)CH₂-.

**[Table 1]**

| | Curing agent | | | | | Main agent | Results of evaluation | | | | | | | | | |
|---|---|---|---|---|---|---|---|---|---|---|---|---|---|---|---|---|
| | (A) | | (B) | Mass ratio (A)/ [(A)+(B)] | Viscosity (25 °C) | Epoxy resin | Viscosity of composition (80°C) | | | | | | Gelation time (80°C) | Gelation time (120°C) | Tg of cured product (120°C 15 minutes) | Releasability (120°C 6 minutes) |
| | AEP | IPDA | NBDA | | | | 0.5 min | 1.0 min | 1.5 min | 2.0 min | 2.5 min | 3.0 min | | | | |
| | (Part(s) by weight) | (Part(s) by weight) | (Part(s) by weight) | | (mPa·s) | Type | (mPa·s) | | | | | | (Minutes) | (Minutes) | (°C) | - |
| Example 1 | 60 | 0 | 40 | 0.60 | 15 | jER825 | 23 | 30 | 44 | 78 | 145 | 295 | 11 | 1 | 120 | |
| Example 2 | 75 | 0 | 25 | 0.75 | 15 | jER825 | 23 | 30 | 49 | 85 | 160 | 338 | 11 | 1 | 116 | |
| Example 3 | 85 | 0 | 15 | 0.85 | 15 | jER825 | 23 | 31 | 52 | 91 | 176 | 378 | 11 | 1 | 114 | |
| Comparative Example 1 | 100 | 0 | 0 | 1 | 15 | jER825 | 23 | 33 | 55 | 100 | 195 | 425 | 11 | 1 | 110 | |
| Example 4 | 0 | 20 | 80 | 0.20 | 16 | jER825 | 24 | 24 | 28 | 34 | 43 | 58 | 15 | 1 | 130 | A |
| Example 5 | 0 | 40 | 60 | 0.40 | 17 | jER825 | 24 | 24 | 28 | 34 | 40 | 55 | 18 | 2 | 128 | A |
| Example 6 | 0 | 60 | 40 | 0.60 | 17 | jER825 | 24 | 24 | 28 | 33 | 38 | 52 | 24 | 3 | 126 | A |
| Example 7 | 0 | 75 | 25 | 0.75 | 18 | jER825 | 25 | 25 | 28 | 33 | 38 | 49 | 28 | 3 | 125 | B |
| Example 8 | 0 | 85 | 15 | 0.85 | 18 | jER825 | 25 | 25 | 29 | 33 | 37 | 46 | 30 | 4 | 124 | B |
| Comparative Example 2 | 0 | 100 | 0 | 1 | 18 | jER825 | 26 | 26 | 29 | 33 | 37 | 44 | 33 | 4 | 123 | C |
| Example 9 | 30 | 30 | 40 | 0.60 | 16 | jER825 | 23 | 28 | 39 | 60 | 101 | 211 | 18 | 2 | 122 | |
| Comparative Example 3 | 50 | 50 | 0 | 1 | 17 | jER825 | 25 | 31 | 45 | 75 | 130 | 272 | 22 | 3 | 117 | |

Table 1 shows that compared with the epoxy resin composition of Comparative Example 1 in which only AEP, which was the component (A), was used as the epoxy resin curing agent, fast curing properties of the epoxy resin compositions of Examples 1 to 3 were maintained, Tg of the cured products was improved, and the composition had a longer pot life than the epoxy resin composition of Comparative Example 1. Furthermore, compared with the epoxy resin composition of Comparative Example 2 in which only IPDA, which was the component (A), was used as the epoxy resin curing agent, the curing speed and Tg of the cured products of the epoxy resin compositions of Examples 4 to 8 were improved without significant decrease in the pot life of the epoxy resin composition. Moreover, the cured products of the epoxy resin compositions of Examples 4 to 6 had particularly excellent releasability. This may be because both the gelation rate and Tg of the cured products of the epoxy resin compositions are high.

All of the pot life, the curing speed and Tg of the cured product of the epoxy resin composition of Example 9 were improved compared with those of the epoxy resin composition of Comparative Example 3.

### Example 10 (Production of CFRP)

A carbon fiber cloth ("CO6343" manufactured by Toray Industries Inc., T300 plain weave cloth, the number of filaments of warp and weft: 3K, weight of the cloth: 198 g/m², 0.25 mm thick, 4 plies) was impregnated with the epoxy resin composition of Example 1 by hand lay-up molding at room temperature to prepare a CFRP base material. Subsequently, the CFRP substrate was placed in aluminum upper and lower molds which had been previously heated at 120°C in an oven, and the molds were immediately sealed and heated for 3 minutes to cure the epoxy resin composition to give CFRP. The resulting CFRP was easily released from the aluminum upper and lower molds, showing that curing of the epoxy resin composition proceeded in short time. Furthermore, the product has good appearance without defect caused by poor impregnation of carbon fiber with the epoxy resin composition.

### Industrial Applicability

The present invention can provide an epoxy resin curing agent and an epoxy resin composition with which CFRP for automotive structural materials and building materials can be produced with high productivity by the high-cycle RTM process or the like by using, as an epoxy resin curing agent, N-aminoethylpiperazine and/or isophoronediamine, which is generally used as a component of an epoxy resin curing agent.

## Claims

1. An epoxy resin curing agent comprising: (A) at least one compound selected from the group consisting of N-aminoethylpiperazine and isophoronediamine, and (B) norbornanediamine, wherein the mass ratio between the component (A) and the component (B) satisfies 0.60 ≤ {(A)/[(A)+(B)]} < 1 if the component (A) comprises N-aminoethylpiperazine.

2. The epoxy resin curing agent according to claim 1, wherein the total content of the component (A) and the component (B) is 50% by mass or more.

3. An epoxy resin composition comprising the epoxy resin curing agent according to claim 1 or 2 and an epoxy resin.

4. A cured product of the epoxy resin composition according to claim 3.

5. A fiber-reinforced composite material comprising the cured product of the epoxy resin composition according to claim 4 and a reinforcing fiber.

6. The fiber-reinforced composite material according to claim 5, wherein the reinforcing fiber is carbon fiber.

## Patentansprüche

1. Epoxyharz-Härtungsmittel, umfassend: (A) zumindest eine Verbindung, ausgewählt aus der Gruppe bestehend aus N-Aminoethylpiperazin und Isophorondiamin, und (B) Norbornandiamin, worin das Masseverhältnis zwischen der Komponente (A) und der Komponente (B) 0,6≤{(A)/[(A)+(B)]}<1 erfüllt, wenn die Komponente (A) N-Aminoethylpiperazin umfasst.

2. Epoxyharz-Härtungsmittel gemäß Anspruch 1, worin der Gesamtgehalt der Komponente (A) und der Komponente (B) 50 Masse-% oder mehr beträgt.

3. Epoxyharzzusammensetzung, umfassend das Epoxyharz-Härtungsmittel gemäß Anspruch 1 oder 2 und ein Epoxyharz.

4. Gehärtetes Produkt aus der Epoxyharzzusammensetzung gemäß Anspruch 3.

5. Faserverstärktes Kompositmaterial, umfassend das gehärtete Produkt der Epoxyharzzusammensetzung gemäß Anspruch 4 und eine verstärkende Faser.

6. Faserverstärktes Kompositmaterial gemäß Anspruch 5, worin die verstärkende Faser Kohlefaser ist.

## Revendications

1. Agent de durcissement de résine époxy comprenant : (A) au moins un composé sélectionné dans le groupe consistant en N-aminoéthylpipérazine et isophoronediamine, et (B) de la norbornanediamine, dans lequel le rapport massique entre le composant (A) et le composant (B) satisfait 0,60 ≤ {(A)/[(A)+(B)]} < 1 si le composant (A) comprend de la **N-**aminoéthylpipérazine.

2. Agent durcisseur de résine époxy selon la revendication 1, dans lequel la teneur totale du composant (A) et du composant (B) est de 50 % en masse ou plus.

3. Composition de résine époxy comprenant l'agent de durcissement de résine époxy selon la revendication 1 ou la revendication 2 et une résine époxy.

4. Produit durci de la composition de résine époxy selon la revendication 3.

5. Matériau composite renforcé par des fibres comprenant le produit durci de la composition de résine époxy selon la revendication 4 et une fibre de renforcement.

6. Matériau composite renforcé par des fibres selon la revendication 5, dans lequel la fibre de renforcement est une fibre de carbone.
